# EUROPEAN PATENT APPLICATION

(11) **EP 3 133 314 A1**
(43) Date of publication of application: **22.02.2017**
(21) Application number: 16180200.4
(22) Date of filing: 19.07.2016
(51) Int. Cl.: F16H 7/08, B02C 18/00

(54) **AUTOMATIC BELT TENSIONING DEVICE AND CHIPPER UTILIZING SAME**

(30) Priority: 04.08.2015 US 201562200810 P; 07.08.2015 US 201562202381 P
(71) Applicant: Vermeer Manufacturing Company, Pella, IA 50219 (US)
(72) Inventor: TRICK, Tim, 4735 BK Zegge (NL)
(74) Representative: Awapatent A/S

(57) **Abstract**

Belt tensioning systems are provided for use with a belt transferring rotational force from a drive pulley to a driven pulley. One belt tensioning system includes a lever arm, an idler rotatably supported by the lever arm, a connecting link, a generally linear guide slot, and a weight coupled to the guide slot for generally linear movement along the guide slot. The lever arm has fixed and linking ends, and the fixed end is pivotably mounted on one side of the belt. The connecting link is pivotably coupled to the lever arm linking end and pivotably coupled to the weight. The belt is positioned between the fixed and linking ends, between the idler and the linking end, and between the idler and the guide slot. Downward movement of the weight causes the idler to increase tension in the belt. Chippers utilizing belt tensioning systems are also provided.

## Description

### Background of the invention

Chippers and other machinery often use drive belts to transfer rotational force between a drive shaft and a driven shaft. But especially during a break-in phase (often the first ten to twenty hours of working life), such drive belts typically stretch some amount (e.g., roughly five to ten percent). Stretching occurs after the break-in phase as well, though often not as rapidly until near the end of belt life. If stretching is ignored, slippage may result. In turn, slippage tends to result in increased wear, which can result in premature belt failure.

To adjust belt tension, prior art systems utilize various mechanical, hydraulic, or electronic systems. Such systems typically require special tools for performing the adjustments, and typically require belt tension to be accurately measured during the adjustment process. Adjusting such systems is generally not quick or easy. Moreover, systems that utilize a spring are typically not sufficiently dynamic to properly tension the belt over a large range of stretching, and/or over cyclic stretching and contracting resulting from loading/unloading. And the complexity of both hydraulic and electronic systems generally renders those systems relatively expensive.

The present disclosure relates generally to automatic belt tensioning devices, and to chippers utilizing such automatic belt tensioning devices.

### Summary of the invention

The following presents a simplified summary in order to provide a basic understanding of some aspects of the invention. This summary is not an extensive overview of the invention. It is not intended to identify critical elements of the invention or to delineate the scope of the invention. Its sole purpose is to present some concepts of the invention in a simplified form as a prelude to the more detailed description that is presented elsewhere.

In one embodiment, a belt tensioning system is provided for use with a belt transferring rotational force from a drive pulley to a driven pulley. The belt tensioning system includes a lever arm, an idler rotatably supported by the lever arm, a connecting link, a generally linear guide slot, and a weight coupled to the guide slot for generally linear movement along the guide slot. The lever arm has a fixed end and a linking end, and the fixed end is pivotably mounted on one side of the belt. The connecting link is pivotably coupled both to the lever arm linking end and to the weight. The belt is positioned between the fixed end and the linking end, between the idler and the linking end, and between the idler and the guide slot. The weight is configured relative to the belt and the idler in such a way that downward movement of the weight causes the idler to increase tension in the belt.

In another embodiment, a belt tensioning system is provided for use with a belt transferring rotational force from a drive pulley to a driven pulley. The belt tensioning system includes an idler, a weight, and linkage interconnecting the idler and the weight. The idler is positioned to contact the belt, and the idler is movable relative to the belt to automatically impart a desired amount of tension in the belt. The weight is coupled to and is translatable along a generally linear guide path, and is configured relative to the belt and the idler such that downward movement of the weight causes the idler to increase tension in the belt.

In still another embodiment, a chipper has a drive pulley rotated by a drive shaft, a driven pulley rotating a driven shaft, a belt transferring rotational force from the drive pulley to the driven pulley, a cutting implement actuated by the driven shaft, a hopper for receiving material to be chipped by the cutting implement, a chute for outputting material chipped by the cutting implement, and a belt tensioning system. The belt tensioning system includes an idler, a weight, linkage interconnecting the idler and the weight, and a guide path. The idler is positioned to contact the belt, and the idler is movable relative to the belt to automatically impart a desired amount of tension in the belt. The weight is coupled to and translatable along the guide path, and the guide path is generally linear. The weight is configured relative to the belt and the idler such that downward movement of the weight causes the idler to increase tension in the belt.

### Brief Description of the Drawings

FIG. 1 is a perspective view of a chipper having an automatic belt tensioning device, in accordance with an embodiment of the current invention and with part of the chipper removed for illustration.
FIG. 2 is a simplified front view of the automatic belt tensioning device of FIG. 1, with an idler at an initial engaged position.
FIG. 3 is another simplified front view of the automatic belt tensioning device of FIG. 1, with the idler at another engaged position.
FIG. 4 is another simplified front view of the automatic belt tensioning device of FIG. 1, with the idler at an initial disengaged position.
FIG. 5 is another simplified front view of the automatic belt tensioning device of FIG. 1, with the idler at another disengaged position.
FIG. 6a is a front view of the automatic belt tensioning device of FIG. 1, with the idler at the disengaged position of FIG. 5.
FIG. 6b is a section view taken along line A-A of FIG. 6a.
FIG. 6c is a section view taken along line B-B of FIG. 6a.

### Detailed Description of the invention

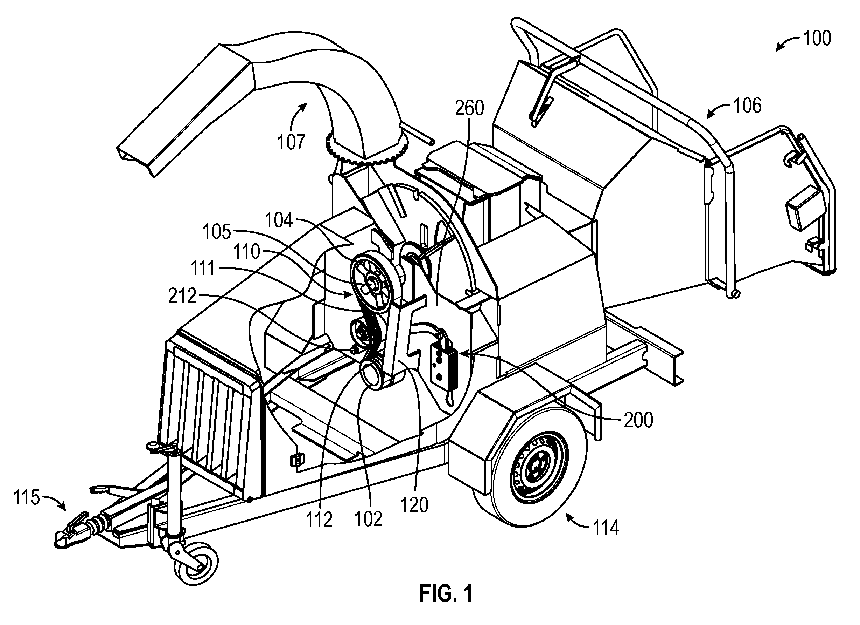

FIG. 1 shows a chipper 100 having an automatic belt tensioning device 200. The chipper 100 has a drive pulley 102 rotated by a drive shaft which may be powered by a motor or engine, as is known in the art. The drive shaft is directly or indirectly coupled to the drive pulley 102 (e.g., through gearing or other force-transferring devices). A driven pulley 104 rotates a driven shaft 105, which in turn (directly or indirectly) drives a chipper drum, cutting disc, auger blade, or other cutting implement which receives material through a hopper 106 and outputs reduced (or "chipped") material through a chute 107.

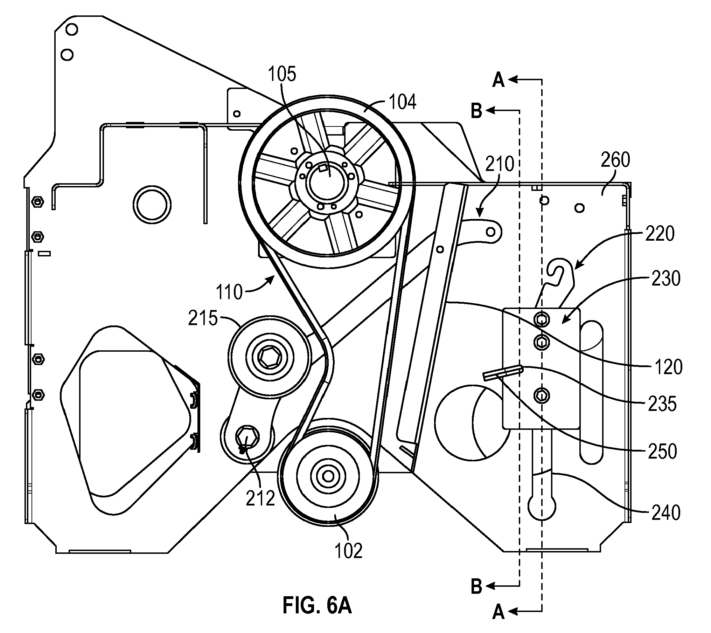

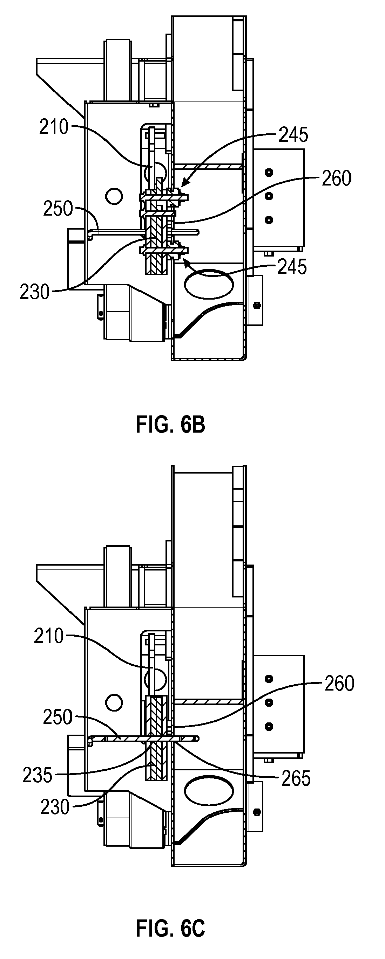

A belt 110 transfers rotational force from the drive pulley 102 to the driven pulley 104. To maintain alignment on the pulleys 102, 104, it may be desirable for the belt 110 to have ribs 111 corresponding to ribs 112 in the pulleys 102, 104. The belt 110 may be formed of natural or synthetic rubber, urethane, reinforcing fiber, and/or other appropriate materials (whether now known or later developed). As shown in FIGS. 1 and 6a, a shield 120 may protect the belt 110 and foreign objects from one another.

The illustrated chipper 100 is configured as a trailer and further includes wheels 114 and a tongue 115 that may be fastened to a hitch or other coupler for towing. In different embodiments, the chipper 100 may be self-propelled or fully stationary. U.S. Pat. No. 5,692,548 discloses an alternate chipper that may be utilized with the belt tensioning device 200, as will be appreciated by those skilled in the art. These alternative chippers are merely examples, and other chippers may also be utilized with the belt tensioning device 200. It shall be further understood that the device 200 may be used in any application in which tensioning is needed or applications that have a hydraulic pump drive. Examples include but are not limited to balers or stump cutters.

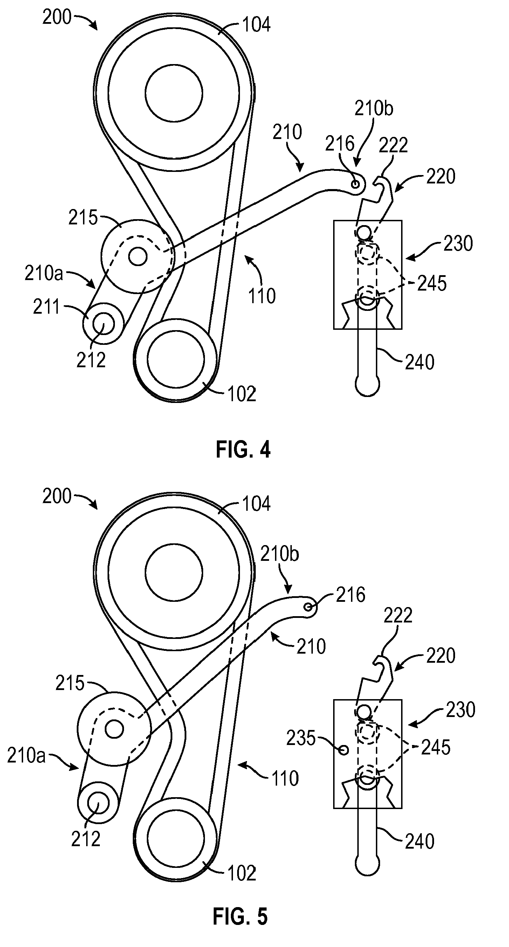

Attention is now directed to the automatic belt tensioning device 200, shown in FIGS. 1 through 6c. As described in detail below, the automatic belt tensioning device 200 includes a lever arm 210, a connecting link 220, a weight 230, and a guide slot 240. While the automatic belt tensioning device 200 is shown being used as part of a chipper, it is to be understood that such a device could be advantageously employed in any system employing a belt drive and where automatic belt tensioning may prove desirable.

The lever arm 210 has a fixed end 210a and a linking end 210b, and the fixed end 210a is pivotably mounted such that a collar 211 rotates about a shaft 212. An idler 215 is rotatably mounted on the lever arm 210 between the fixed and linking ends 210a, 210b, and the idler 215 is configured to press against the belt 110 to create tension in the belt 110. It may be desirable for the idler 215 to be constructed of a low-friction material, and the idler 215 may be mounted to the lever arm 210 using low-friction bearings. The lever arm 210 may pass through an opening 122 in the shield 120, as shown in FIGS. 1 and 6a.

The linking end 210b is rotatably coupled to the connecting link 220 (in either a permanent or removable manner), and the connecting link 220 is rotatably coupled to the weight 230 (in either a permanent or removable manner). In the embodiment 200, the connecting link 220 has a hook 222 that selectively interacts with mating structure 216 on the linking end 210b, and the connecting link 220 is permanently coupled to the weight 230. To provide separation in embodiments where the connecting link 220 is permanently coupled to both the linking end 210b and the weight 230, the link 220 may be selectively divisible.

The weight 230 is coupled to the guide slot 240 by one or more guide 245. In embodiment 200, two rotatable guides 245 are provided as wheels 245a which interact with the guide slot 240. The wheels 245a are spaced apart with one wheel 245a at a generally upper end of the weight 230 and another wheel 245a at a generally lower end of the weight 230, and the wheels 245a are preferably sized to maintain contact with both sides of the guide slot 240 while still being rotatable in the guide slot 240. Those skilled in the art will appreciate that, in some embodiments, there is space between the guides 245 and one or both sides of the guide slot 240. It may be desirable for the guides 245 to prevent the weight 230 from deflecting more than five degrees as the weight 230 moves along the guide slot 240.

The guide slot 240 may inhibit the weight's 230 natural tendency to "swing" (e.g., move in a non-linear path). Swinging of the weight 230 may cause variations in the force applied to the idler 215, thus decreasing the efficiency of the machine.

Orientation of the guide slot 240 affects an amount of force transferred from the weight 230 to the guide slot 240. In many situations, it may be desirable for the guide slot 240 to be generally vertical (e.g., in the direction of gravitational pull). A generally linear guide path limits variations in the force applied to the idler. Yet dampening, relative to the nominally vertical orientation, may be increased by angling the top of the guide slot 240 away from the belt 110, and may be decreased by angling the top of the guide slot 240 toward the belt 110. As the guide slot 240 is angled away from the belt 110, the maximum force translated to the idler 215 via the weight 230 is decreased, thus requiring a greater weight to achieve similar forces to the idler 215. As the guide slot 240 is angled toward the belt 110, the braking generated by the angle upon the belt 110 may overcome the benefit offered by the weight 230. Accordingly, it may be understood that the benefits of an angled guide slot 240 may be recognized within a narrow angle range (e.g., approximately ten degrees from vertical).

As shown in FIGS. 6a through 6c, a lifting pin 250 may be selectively received through a hole 235 in the weight 230 and a hole 265 in a stationary member 260, such that the weight 230 is temporarily locked relative to the stationary member 260 when the lifting pin 250 passes through both holes 235, 265. It may be particularly desirable for the holes 235, 265 to be aligned such that the weight 230 is at or toward an upper end of the guide slot 240 when at the locked position, as shown in FIGS. 6a through 6c. The lifting pin 250 may be tethered to an appropriate structure or otherwise stored when not locking the weight 230 relative to the stationary member 260. In some embodiments, the guide slot 240 is formed in the stationary member 260; in other embodiments, the guide slot 240 is formed in another stationary structure. Further, as will be appreciated by those skilled in the art, some embodiments may utilize a latch or other type of temporary locking mechanism instead of a lifting pin 250, or the locking mechanism may be entirely omitted.

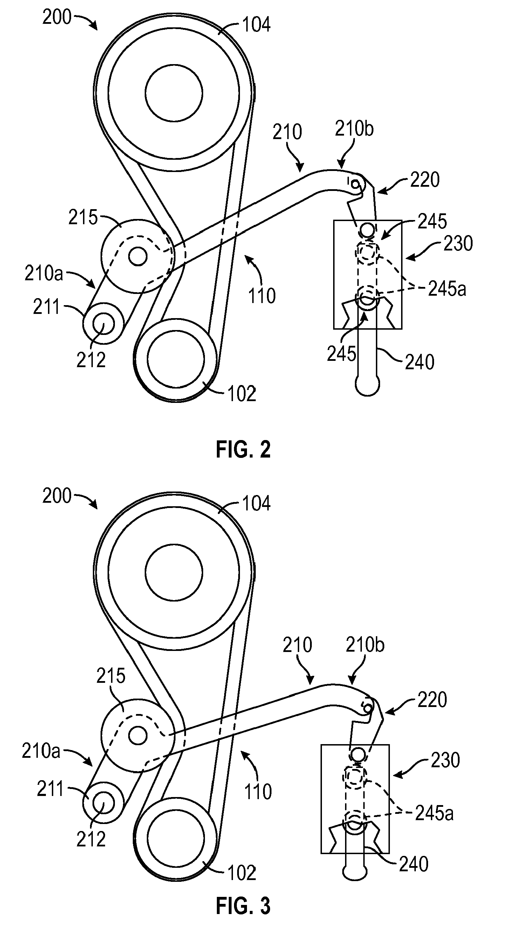

In use, the weight 230 is pulled downwardly by gravity, and alignment is maintained through interaction between the guides 245 in the guide slot 240. Lowering of the weight 230 pulls the connecting link 220 downwardly and causes the connecting link 220 to rotate. In turn, the connecting link 220 causes the lever arm 210 to rotate downwardly about the shaft 212, forcing the idler 215 to press against the belt 110 to create tension in the belt 110. This arrangement is shown, for example, in FIG. 2.

The drive shaft turns the drive pulley 102, and the tensioned belt 110 causes the driven pulley 104 to rotate. The driven pulley 104 rotates the driven shaft 105 (FIG. 1), which drives a chipper drum, cutting disc, auger blade, or other cutting implement which receives material through the hopper 106 and outputs chipped material through the chute 107.

As the belt 110 stretches, either due to wear or cyclic loading/unloading, the weight 230 automatically lowers along the guide slot 240 to result in additional downward rotation of the lever arm 210 and increased force imparted by the idler 215 on the belt 110. This is shown in FIG. 3. Because the tension on the belt 110 is adjusted automatically during use, micro slipping of the belt 110 on the pulleys 102, 104 may be reduced and belt life may be increased.

Cyclic loading/unloading caused by the cutting implement periodically chipping material received through the chute 107 affects the amount of force acting on the driven pulley 104 from the driven shaft 105, and in turn affects the amount of tension on the belt 110 and stretching/contracting of the belt 110. The geometry of the lever arm 210 and the connecting link 220 may be particularly effective in imparting a side load between the guides 245 and the guide slot 240. The side load may prevent the weight 230 from freely moving up and down, effectively dampening out drive belt tension resonance. More particularly, an upward (in FIG. 2, counter-clockwise) rotation of the lever arm 210 causes the connecting link 220 to rotate (in FIG. 2, counter-clockwise), which causes the upper guide 245 to impart a sideward (in FIG. 2, leftward) force on the guide slot 240 (or alternatively, causes the guide slot 240 to impart a resisting side load on the guide 245). That force on the guide slot 240 may slow the upward movement of the weight 230. Conversely, a downward (in FIG. 2, clockwise) rotation of the lever arm 210 causes the connecting link 220 to rotate (in FIG. 2, clockwise), which causes the upper guide 245 to impart a sideward (in FIG. 2, rightward) force on the guide slot 240 (or alternatively, causes the guide slot 240 to impart a resisting side load on the guide 245). That force on the guide slot 240 may slow the downward movement of the weight 230.

It may be apparent that the belt 110 needs to be replaced when the lever arm 210 is at a lower end of the opening 122. To replace the worn belt 110, no special tools are required. The weight 230 is raised to the locked position, and the lifting pin 250 is passed through both holes 235, 265 to lock the weight 230 relative to the stationary member 260. The lever arm 210 and the connecting link 220 may be disconnected, and the lever arm 210 may be rotated upwardly (as shown in FIG. 6a) such that the idler 215 is separated from the worn belt 110. With the idler 215 separated from the worn belt 110, tension on the worn belt 110 is removed and the worn belt 110 may be easily separated from the pulleys 102, 104.

A new belt 110 may be placed around the pulleys 102, 104, without tension on the new belt 110. The lever arm 210 may then be rotated downwardly and reconnected to the connecting link 220. The lifting pin 250 may be removed from the holes 235, 265, allowing the weight to lower until the idler 215 imparts a desired force on the belt 110. No manual adjustment is required for the belt tensioning device 200 to provide the desired amount of tension on the belt 110. Any desired changes in force (e.g., due to new power transmission requirements, differences in nominal belt elasticity, higher or lower horsepower requirements, belt size changes (e.g., length, width, number of belt sections), etc.) can be made simply by adding mass to or subtracting mass from the weight 230.

The discussion above and corresponding figures illustrates a belt tensioning device wherein the belt tension is applied from the bottom. However, it shall be understood that the belt tension may alternately be applied from the top, e.g., in a mirror image to that shown in the figures. Thus, in an embodiment where the belt tension is applied from the top, the connecting link 220 may be located at a bottom side of the weight 230. The belt tensioning device may operate substantially similarly to the embodiment described above, though the belt tension is applied from the top rather than the bottom.

Many different arrangements of the various components depicted, as well as components not shown, are possible without departing from the spirit and scope of the present invention. Embodiments of the present invention havebeen described with the intent to be illustrative rather than restrictive. Alternative embodiments will become apparent to those skilled in the art that do not depart from its scope. A skilled artisan may develop alternative means of implementing the aforementioned improvements without departing from the scope of the present invention. It will be understood that certain features and subcombinations are of utility and may be employed without reference to other features and subcombinations and are contemplated within the scope of the claims. The specific configurations and contours set forth in the accompanying drawings are illustrative and not limiting. All steps need not be performed in the order shown or described.

## Claims

1. A belt tensioning system for use with a belt transferring rotational force from a drive pulley to a driven pulley, the belt tensioning system comprising:
a lever arm having a fixed end and a linking end, the fixed end being pivotably mounted on one side of the belt, the belt being positioned between the fixed end and the linking end,
an idler rotatably supported by the lever arm, the belt being positioned between the idler and the lever arm linking end;
a generally linear guide slot, the belt being positioned between the idler and the guide slot;
a weight coupled to the guide slot for generally linear movement along the guide slot; and
a connecting link pivotably coupled to the lever arm linking end, the connecting link being pivotably coupled to the weight;
wherein the weight is configured relative to the belt and the idler in such a manner that downward movement of the weight causes the idler to increase tension in the belt.

2. The belt tensioning system of claim 1, wherein the guide slot extends generally vertically, and/or
wherein at least one linkage between the weight and the idler is divisible, and/or
wherein the connecting link is removably coupled to the lever arm linking end, and/or
wherein a plurality of guides couple the weight to the guide slot.

3. The belt tensioning system of any one of the previous claims, wherein at least one said guides imparts a side load upon the guide slot when the weight moves in a vertical direction, and wherein:
when the weight moves upwardly, the side load is in a first direction;
when the weight moves downwardly, the side load is in a second direction; and
the second direction is opposite the first direction.

4. The belt tensioning system of any one of the previous claims, wherein the guides prevent the weight from deflecting more than five degrees as the weight moves along the guide slot.

5. The belt tensioning system of any one of the previous claims, wherein:
the guide slot extends generally vertically; and
at least one linkage between the weight and the idler is divisible.

6. A belt tensioning system for use with a belt transferring rotational force from a drive pulley to a driven pulley, the belt tensioning system comprising:
an idler positioned to contact the belt, the idler being movable relative to the belt to automatically impart a desired amount of tension in the belt;
a weight coupled to and translatable along a guide path, the guide path being generally linear; and
at least one linkage interconnecting the idler and the weight;
wherein downward movement of the weight causes the idler to increase tension in the belt.

7. The belt tensioning system of claim 6, wherein the guide path extends generally vertically, and/or
wherein the at least one linkage between the weight and the idler is divisible, and/or
wherein the guide path is a guide slot, and a plurality of guides couple the weight to the guide slot.

8. The belt tensioning system of any one of claims 6 to 7, wherein at least one said guide imparts a side load upon the guide slot when the weight moves in a vertical direction, and wherein:
when the weight moves upwardly, the side load is in a first direction;
when the weight moves downwardly, the side load is in a second direction; and
the second direction is opposite the first direction.

9. The belt tensioning system of any one of claims 6 to 8, wherein the guides prevent the weight from deflecting more than five degrees as the weight moves along the guide slot.

10. A chipper, comprising:
a drive pulley rotated by a drive shaft;
a driven pulley rotating a driven shaft;
a belt transferring rotational force from the drive pulley to the driven pulley;
a cutting implement actuated by the driven shaft;
a hopper for receiving material to be chipped by the cutting implement;
a chute for outputting material chipped by the cutting implement; and
a belt tensioning system comprising:
an idler positioned to contact the belt, the idler being movable relative to the belt to automatically impart a desired amount of tension in the belt;
a weight coupled to and translatable along a guide path, the guide path being generally linear; and
linkage interconnecting the idler and the weight;
wherein the weight is configured relative to the belt and the idler in such a manner that downward movement of the weight causes the idler to increase tension in the belt.

11. The chipper of claim 10, wherein:
the linkage comprises a lever arm and a connecting link;
the idler is rotatably supported by the lever arm;
the lever arm has a fixed end and a linking end;
the fixed end is pivotably mounted on one side of the belt;
the belt is positioned between the idler and the guide path;
the connecting link is pivotably coupled to the lever arm linking end; and
the connecting link is further pivotably coupled to the weight.

12. The chipper of any one of claims 10 to 11, wherein:
the guide path is a guide slot; and
a plurality of guides couple the weight to the guide slot.

13. The chipper of any one of claims 10 to 12, wherein the guide slot has a first generally vertical side and an opposing second generally vertical side, and wherein:
when the weight moves in an upward direction, the first generally vertical side imparts a first resisting side load on at least one of the guides; and
when the weight moves in a downward direction, the second generally vertical side imparts a second resisting side load on at least one of the guides.

14. The chipper of any one of claims 10 to 13, wherein the guides prevent the weight from deflecting more than five degrees as the weight moves along the guide slot.

15. The chipper of any one of claims 10 to 14, wherein the linkage is divisible between the weight and the idler.
